# EUROPEAN PATENT APPLICATION

(11) **EP 1 486 268 A1**
(43) Date of publication of application: **15.12.2004**
(21) Application number: 03076974.9
(22) Date of filing: 11.06.2003
(51) Int. Cl.: B21D 22/16, B21D 41/04, B29C 45/20

(54) **Method for the production of tubular structures with a gradually changing inner diameter**

(71) Applicant: Synventive Molding Solutions B.V., 3295 KV 's-Gravendeel (NL)
(72) Inventor: Sattler, Peter, 64673 Zwingenberg (DE); Liebram, Udo, 64319 Pfungstadt (DE)
(74) Representative: Jorritsma, Ruurd

(57) **Abstract**

The invention relates to a method for the manufacturing of tubular structures 1 in injection molding devices. These tubular structures 1 have different sections with different inner diameters. The method has as most important process steps that a mandrel 7 is brought inside a tube 13 and that the tube 13 is compressed at its exterior surface such that its inner diameter Di is formed in accordance with the outer contour 14 of the mandrel 7.

## Description

The present invention relates to a method for the manufacturing of a tubular structure having a first section with a relatively large diameter, a second section with a smaller diameter and a transition section of gradually changing diameter connecting the first section and the second section.

More specifically, the invention relates to tubes, nozzles and heated channels ("hot runners") in injection molding devices having a gradually changing inner diameter.

In order to minimize friction losses caused by velocity and pressure variations in injection molding devices it is important that the inner diameters of the various components making up such injection molding devices (e.g. tubes, nozzles heated channels) -- which convey the molten thermoplastic material often at temperatures above 200°C -- change gradually. Presently, a variation in the inner diameters of tubes, nozzles and heated channels in injection molding devices is obtained by removing material from the inside of these channels. This method however, has several disadvantages. Specialized and complex equipment has to be used. After removal of the material, the resulting smoothness of the inner surface is relatively poor and the precision with which the inner surface can be constructed is relatively low. This has as a consequence that more than one manufacturing step is necessary.

An object of he present invention is to provide a method that does not have these disadvantages, and that is more quickly and easily realized without the use of complex equipment, results in a smoother inner surface that can be established with higher tolerance requirements than is possible in the state of the art and which is more economical. It is a further object of the present invention to provide a method of providing a varying diameter, resulting in improved surface properties of the internal wall.

In a first embodiment the method according to the invention is therefore characterized in that the method comprises the steps of:
-- providing a tube with a wall, having an internal diameter and an external diameter,
-- placing a mandrel inside the tube, the mandrel having a diameter equal to or smaller than the internal diameter of the tube, and
-- compressing the tube at its exterior surface such that the wall of the tube is at least at the position of the mandrel compacted by compressing the wall of the tube against the mandrel. This enables a relatively cheap, quick and easy way to produce tubes with enhanced wear resistance properties.
In a further embodiment the invention also relates to the embodiment described above wherein the tubular structure has a first section with a relatively large diameter, a second section with a smaller diameter and a transition section of gradually changing diameter connecting the first section and the second section, and wherein
-- the mandrel has a first section with a relatively large diameter, a second section with a smaller diameter and a transition section between the first section and the second section of gradually changing diameter, the diameters of the sections being equal to and/or smaller than the internal diameter of the tube, and
   -- wherein the internal diameter and the external diameter of the tube at least at the axial position of the transition section and the second section of the mandrel are reduced and the internal diameter is formed in accordance with an outer contour of the mandrel.This has as an advantage that the transition in diameter can be established with a high degree of precision. Moreover, afterwards no further process steps are necessary as the final transition in diameter -- having a contour optimized in order to minimize friction losses -- is obtained in only one process step. The formed channel with reduced diameter has a smooth surface and a smaller band of tolerance than is possible with the presently used material removing techniques. Since no material is removed, the method according to the present invention is much more economical compared to the state of the art. As a further advantage, due to plastically deforming, it was found by the applicant that the inner surface of the tubular structure is compacted which results in improved wear resistance, which is especially advantageous for injection molding devices. The deformation can be carried out by rollers located at opposite sides of the tubular structure, while rotating the tubular structure around its axis or by squeezing the material around the mandrel, while keeping the tubular structure stationary.

In a further embodiment, the method according to the invention is characterized in that the inner diameter and outer diameter of the tubular structure are reduced also at the first section of the tubular structure. This has as an advantage that a surface compaction of the entire internal wall (first section, transition section and second section) of the tubular structure is obtained.

In another further embodiment the method according to the invention is characterized in that the tubular structure and the mandrel are axially transported between at least one pair of compression rollers. During transportation the tubular structure and the mandrel are rotated along their longitudinal axes. This has as an advantage that a tubular structure is obtained which has a highly uniformly compacted inner wall.

In another further embodiment the method according to the invention is characterized in that the tube and the mandrel are rotated around their longitudinal axes. This results in a tube that is cylindrically symmetric to a relatively high extent.

Another embodiment of the method according to the invention is characterized in that the tubular structure is not heated prior to compaction of the wall of the tubular structure. This has as an advantage that the inner surface of the tubular structure will not be liable to degradation caused by, for instance, oxidation processes. This will result in more advantageous material properties, e.g. a smoother and more durable surface.

In another further embodiment the method according to the invention is characterized in that the tubular structure is a component of an injection molding device such as a tube, nozzle or heating element. This has as an advantage that a transportation system is provided that can operate in a hot, aggressive environment.

The invention will now be described with reference to the accompanying drawings, in which
Fig 1 shows a lengthwise section of a tube structure with a mandrel inside during plastic deformation of the first section and the transition section of the tube.
Fig 2 shows a lengthwise section a tubular structure after treatment of the tube from fig 1 with a method according to the invention.
Fig 3 shows a lengthwise section of a tube with a mandrel inside prior to plastic deformation and compaction of the wall of the first section, the transition section and the second section of the tube.
Fig 4 shows a lengthwise section of a tubular structure after treatment of the tube from 3 with a method according to the invention.

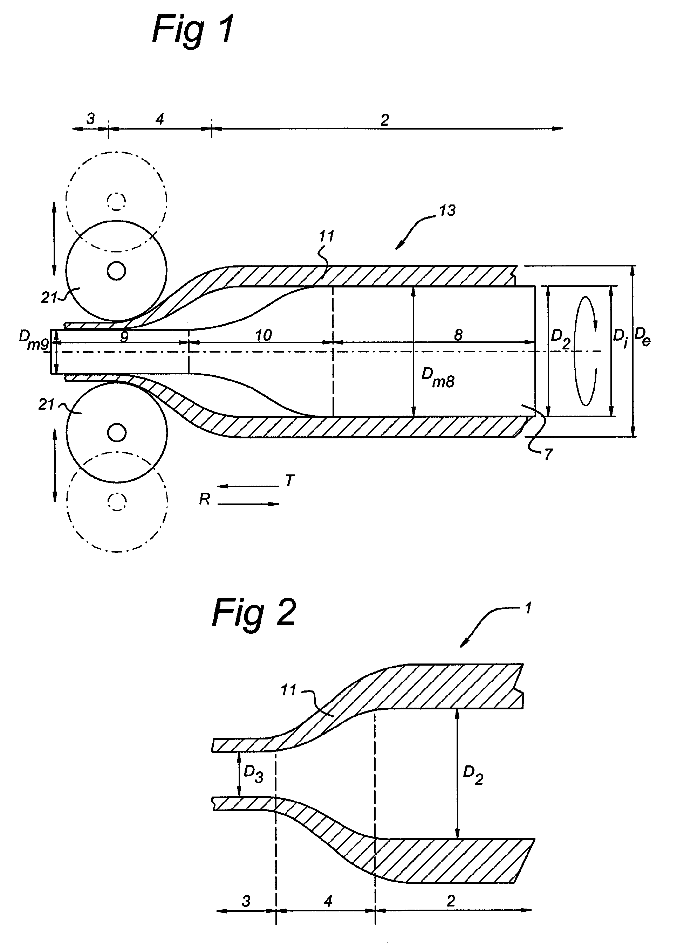

In the figures corresponding reference numerals refer to corresponding parts. In fig 1 a tube 13 made of metal with wall 11 is shown which is fed between compression rollers 21 in a transport direction indicated by arrow T. The tube 13 and a mandrel 7 placed inside the tube 13 are rotated along their longitudinal axes. The tube 13 is transported between the compression rollers 21 up to the where compaction of the wall 11 is desired. Upon reaching this point the transport direction is reversed as indicated by the arrow R. During the compaction process the compression rollers 21 may move along the direction indicated by the arrows alongside the compression rollers 21 in fig 1, as will be clear to the skilled person. Compression results in a reduction of the diameter and hence in a local compaction of the wall 11. After the treatment a tubular structure 1 is formed that consists of a first section 2, a second section 3 and a third section which all differ in inner diameter as shown in fig 2. The first section 2 has a relatively large inner diameter D2, the second section 3 has a diameter D3 smaller than D2 and the third section that is a transition section 4 between the first section 2 and the second section 3 has a gradually changing diameter. The inner diameters of these sections are formed in accordance with an outer contour 14 of the mandrel 7 that is present inside the tube 13. The mandrel 7 comprises different diameter sections. The relatively large diameter Dm8 section of the mandrel 7 is denoted by 8. The section with a diameter Dm9 smaller than Dm8 is denoted by 9. The transition section in between these sections is marked with reference numeral 10. In the embodiment shown in fig 1 the relatively large inner diameter D2 of the tube 13 and the relatively large diameter Dm8 section of the mandrel 7 are nearly equal.

In fig. 2 the tubular structure 1 formed out of constant diameter tube 13 of figure 1 is shown after treatment. The wall 11 of the tubular structure 1 is not substantially compacted in the section 2 but is relatively strongly compacted in reduced diameter section 3 which as a consequence has improved wear resistance.

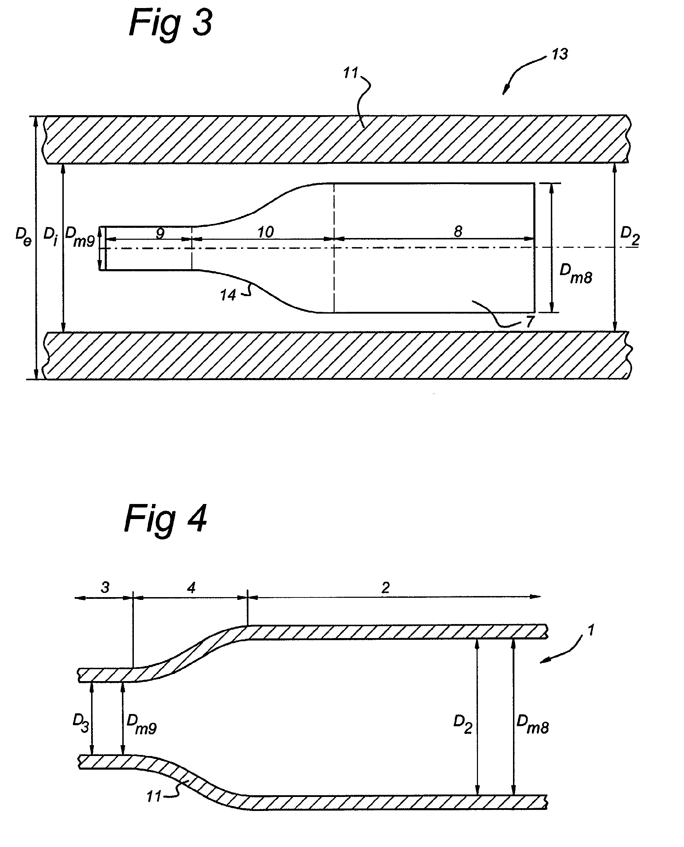

The embodiment in fig 3 shows a tube 13, prior to treatment with a mandrel 7 inside where the mandrel 7 has a section with a relatively large diameter Dm8 considerably smaller than relatively large inner diameter D2 of the tube 13. Preferably, the tube 13 will be cylindrically symmetric along its longitudinal centerline in order to obtain a tubular structure 1 (fig 4) that has a wall 11 which structure is uniform and homogeneous.

In fig 4 the tubular structure 1 of figure 3 formed out of constant diameter tube 13 of figure 3 is shown. The wall 11 is compacted along the whole length in all sections 2,3 and 4 by reduction of the outer diameter De and inner diameter Di. The inner diameter Di of the tubular structure 1 is in accordance with the diameter of the mandrel 7.

With respect to the figures above it is observed that it is also possible to use the invention to compact the wall 11 of a tube 13. I.e. without affecting the diameter of the tube 13. This may be done by using a mandrel 7 that has the same (or almost the same) diameter as the tube 13 and is cylindrically shaped so does not comprise different diameter sections. Compression of the wall 11 around the mandrel 7 results in the compaction. This compaction will result in better resistance against wear.

## Claims

1. Method for manufacturing a tubular structure **characterized in that** the method comprises the steps of:
-- providing a tube (13) with a wall (11), having an internal diameter (Di) and an external diameter (De),
-- placing a mandrel (7) inside the tube (13), the mandrel (7) having a diameter equal to or smaller than the internal diameter (Di) of the tube (13), and
-- compressing the tube (13) at its exterior surface such that the wall (11) of the tube (13) is at least at the position of the mandrel (7) compacted by compressing the wall (11) of the tube (13) against the mandrel (7).

2. Method for manufacturing a tubular structure (1) according to claim 1, wherein the tubular structure (1) has a first section (2) with a relatively large diameter (D2), a second section (3) with a smaller diameter (D3) and a transition section (4) of gradually changing diameter connecting the first section (2) and the second section (3), and wherein
-- the mandrel (7) has a first section (8) with a relatively large diameter (Dm8), a second section (9) with a smaller diameter (Dm9) and a transition section (10) between the first section (8) and the second section (9) of gradually changing diameter, the diameters of the sections (8, 9, 10) being equal to and/or smaller than the internal diameter (Di) of the tube (13), and
-- wherein the internal diameter (Di) and the external diameter (De) of the tube (13) at least at the axial position of the transition section (10) and the second section (9) of the mandrel (7) are reduced and the internal diameter (Di) is formed in accordance with an outer contour (14) of the mandrel (7).

3. Method according to claim 2, wherein the internal diameter (Di) and the external diameter (De) of the tube (13) are reduced also at the axial position of the first section (8) of the mandrel (7) and the internal diameter (Di) is formed in accordance with the outer contour (14) of the mandrel (7).

4. Method according to any of the preceding claims, wherein the tube (13) and the mandrel (7) are axially transported between at least one pair of compression rollers (2).

5. Method according to claim 3, wherein the tube (13) and the mandrel (7) are rotated around their longitudinal axes.

6. Method according to any of the preceding claims, wherein the tube (13) is not heated prior to reducing the internal diameter (Di) and the external diameter (De).

7. Method according to any of the preceding claims, wherein the tubular structure (1) is an injection molding channel for transporting molten thermoplastic material.
